# EUROPÄISCHE PATENTSCHRIFT

(11) **EP 1 715 179 B1**
(45) Veröffentlichungstag und Bekanntmachung des Hinweises auf die Patenterteilung: **23.01.2013**
(21) Anmeldenummer: 06004691.9
(22) Anmeldetag: 08.03.2006
(51) Int. Cl.: F02P 5/152

(54) **Verfahren zum Vermeiden von verfrühten Verbrennungsereignissen bei einer Brennkraftmaschine**
Method for preventing premature combustion occurences in an internal combustion engine
Procédé pour éviter l'apparition de la combustion prématurée dans un moteur à combustion interne

(30) Priorität: 31.03.2005 AT 5432005
(43) Veröffentlichungstag der Anmeldung: 25.10.2006
(73) Patentinhaber: Bayerische Motoren Werke Aktiengesellschaft, 80809 München (DE)
(72) Erfinder: Ludwig, Bernhard, 81379 München (DE); Miersch, Julia, Dr., 80333 München (DE); Grössl, Rene, 8045 Graz (AT)

(56) Entgegenhaltungen:
- WO-A-02/20963
- DE-A1- 19 908 729
- JP-A- 11 241 641
- JP-A- 62 131 976
- JP-A- 62 251 450

## Beschreibung

Die Erfindung betrifft ein Verfahren zum Vermeiden von verfrühten Verbrennungsereignissen bei einer Brennkraftmaschine.

Insbesondere bei aufgeladenen Hochleistungs-Otto-Motoren treten gelegentlich Verbrennungen vor dem eigentlichen Zündzeitpunkt auf, die zu extrem starken Klopfereignissen führen. Folgen viele dieser verfrühten Verbrennungen aufeinander, so kann die Brennkraftmaschine zerstört werden. Die Verbrennungen werden unter anderem durch Ablagerungen im Brennraum ausgelöst, die sich von der Brennraumwand lösen und in glühendem Zustand den Brennraum durchsetzen. Als weitere Ursachen für Hochgeschwindigkeitsklopfen kommen unverbrannter Kraftstoff oder Öl im Zylinder in Frage.

Aus der JP 11 241641 A ist ein Verfahren zum Vermeiden einer Selbstzündung bekannt, bei dem vorausgehend zeitbezogen zwischen Selbstzündung und Klopfen unterschieden wird.

Es ist aus der DE 100 43 700 A1 und der DE 199 08 729 A1 bekannt, Klopfen, also anormale Verbrennungsvorgänge durch klopfreduzierende Maßnahmen, wie Verschieben des Zündzeitpunktes nach spät oder Durchführen einer mehrfachen Einspritzung, zu reduzieren. Diese Maßnahmen beeinflussen aber nur anormale Verbrennungsvorgänge, die nach dem Zündzeitpunkt statt finden (klassisches Klopfen), und nicht die für die Brennkraftmaschine gefährlicheren verfrühten Verbrennungen, die nicht durch die Wahl des Zündzeitpunktes beeinflusst werden können. Verfrühte Verbrennungen lassen sich nicht durch Spätstellen der Zündung vermeiden.

Es ist weiterhin bekannt, das Klopfen durch verstärkte Abgasrückführung zu reduzieren, siehe JP 58-025559 A.

Die JP 62-251450 A beschreibt eine Einrichtung zur Verminderung des Klopfens, wobei im Hochlastbereich und bei Beschleunigung im Teillastbereich unterschiedliche Klopfverhinderungsmaßnahmen ergriffen werden. Im Volllastbereich wird die Menge der Ansaugluft reduziert, im Teillastbereich eine Verschiebung des Zündzeitpunktes nach spät durchgeführt.

Aufgabe der Erfindung ist es, auf möglichst einfache Weise für die Brennkraftmaschine gefährliche Klopferscheinungen zu erkennen und zu vermeiden.

Erfindungsgemäß wird dies dadurch erreicht:
- Bereitstellen zumindest eines Klopfsensors zum Erkennen von Klopfereignissen im Brennraum;
- bei Auftreten eines Klopfereignisses: Durchführen eines Prüfungsschrittes zur Unterscheidung zwischen zündfunkeninduziertem normalen Klopfen und verfrühter Verbrennung;
- Durchführen von zumindest einer Maßnahme zur Vermeidung von verfrühter Verbrennung, wenn das Klopfereignis als verfrühte Verbrennung identifiziert wird.

Die Erfindung macht sich dabei die Tatsache zu nutze, dass für verfrühte Verbrennung (früher auch als Hochgeschwindigkeitsklopfen bezeichnet) verantwortliche Klopfereignisse beim indizierten Motor deutlich von normalen Klopfereignissen (früher auch als Beschleunigungsklopfen bezeichnet) zu unterscheiden sind. Als normale Klopfereignisse werden hier zündfunkeninduzierte Klopfereignisse bezeichnet, die sich beispielsweise durch Spätstellen der Zündung verringern lassen.

Zur Erkennung der verfrühten Verbrennung stehen verschiedene Möglichkeiten zur Verfügung. In einer ersten erfindungsgemäßen Ausführungsvariante ist vorgesehen, dass geprüft wird, ob die Intensität (z. B. die in einem Messzeitfenster erfasste maximale Amplitude oder das Integral über die in einem Messzeitfenster erfassten Amplituden) des Klopfereignisses über einer ersten Klopfschwelle für normales Klopfen liegt, und dass bei Überschreiten der ersten Klopfschwelle und vorzugsweise bei Nichterreichen einer zweiten Klopfschwelle für verfrühte Verbrennung eine Maßnahme zur Verhinderung des normalen Klopfereignisses durchgeführt wird. Vorteilhafterweise ist vorgesehen, dass der Prüfungsschritt beinhaltet, dass bei Auftreten eines Klopfereignisses zuerst eine Maßnahme zur Verhinderung des normalen Klopfens durchgeführt und der Erfolg dieser Maßnahme überwacht wird, und dass bei negativem Erfolg der Maßnahme das Klopfereignis als verfrühte Verbrennung identifiziert wird. Eine Maßnahme zur Verminderung des normalen Klopfens ist beispielsweise eine Verstellung des Zündwinkels nach spät. Bleibt die Maßnahme zur Vermeidung des normalen Klopfens ohne Wirkung, so handelt es sich um verfrühte Verbrennung und es müssen andere Maßnahmen zu deren Vermeidung getroffen werden.

Weiterhin kann vorgesehen sein, dass der Prüfungsschritt beinhaltet, dass geprüft wird, ob die Intensität des Klopfereignisses über einer definierten zweiten Klopfschwelle für verfrühte Verbrennung liegt und dass bei Überschreiten der zweiten Klopfschwelle das Klopfereignis als verfrühte Verbrennung identifiziert wird. Verfrühte Verbrennungen zufolge Frühzündungen lösen deutlich lautere Klopfereignisse aus. Daher sind Klopfereignisse zufolge Frühzündungen deutlich von anderen Klopfereignissen unterscheidbar.

Eine weitere Möglichkeit zur Erkennung der verfrühten Verbrennung bietet die Tatsache, dass die Klopfereignisse zufolge verfrühter Verbrennung früher eintreten können als Klopfereignisse zufolge normalen Klopfens. Daher ist es möglich, dass der Prüfungsschritt vorsieht, dass der Zeitpunkt des Klopfereignisses ermittelt wird, und dass das Klopfereignis als verfrühte Verbrennung identifiziert wird, wenn diese vor einem vordefinierten Zeitpunkt innerhalb eines Arbeitszyklus auftritt.

In einem vorteilhaften Ausführungsbeispiel hierzu können beispielsweise zwei Messfenster zur Erfassung der Intensität bzw. Amplituden von Klopfereignissen definiert werden, wobei das erste Messfenster zur Erfassung der verfrühten Verbrennung früher als das zweite Messfenster zur Erfassung des normalen Klopfens beginnt. Die Messfenster können sich auch überschneiden.

Besonders vorteilhaft ist folgendes Auswerteverfahren:
Im ersten Messfenster wird nur die Überschreitung einer ausschließlich der Erkennung der verfrühten Verbrennung zugeordneten Klopfschwelle bezogen auf die Intensität des Klopfereignisses bzw. Klopfsignals überprüft. Im zweiten Messfenster werden sowohl die Überschreitung der ersten Klopfschwelle zur Erkennung des normalen Klopfens als auch die
Überschreitung der zweiten Klopfschwelle zur Erkennung der verfrühten Verbrennung bezogen auf die Intensität des Klopfereignisses bzw. Klopfsignals überprüft. Die Klopfschwelle zur Erkennung der verfrühten Verbrennung im ersten Messfenster kann sich von der zweiten Klopfschwelle zur Erkennung der verfrühten Verbrennung im zweiten Messfenster unterscheiden.

Eine wirksame Maßnahme zur Verhinderung der verfrühten Verbrennung besteht darin, dass die Motorlast oder das Motormoment zumindest des betreffenden Zylinders reduziert wird, wobei vorzugsweise vorgesehen sein kann, dass die Reduzierung der Motorlast oder des Motormoments zumindest teilweise durch Abmagern oder Anfetten zumindest des betreffenden Zylinders durchgeführt wird.

Alternativ dazu oder zusätzlich dazu kann vorgesehen sein, dass die Reduzierung der Motorlast oder des Motormoments zumindest teilweise durch Absenken des Saugrohrdruckes erfolgt.

Alternativ dazu oder zusätzlich dazu kann vorgesehen sein, dass die Reduzierung der Motorlast oder des Motormoments zumindest teilweise durch zylinderselektive Kraftstoffabschaltung und/oder Zündausblendung erfolgt.

Überschreiten die verfrühten Verbrennungen eine bestimmte Häufigkeit, so muss eine Reduzierung der Motorlast oder des Motormoments erfolgen, um die Brennkraftmaschine nicht zu gefährden. Da Zündwinkelrücknahmen bei verfrühter Verbrennung keinen Erfolg haben, ist eine stärkere Reduzierung der Motorlast oder des Motormoments mittels der genannten Alternativen die einzige Möglichkeit, diese Glühzündungen zu stoppen. Mit dem erfindungsgemäßen Verfahren können Schäden zufolge der verfrühten Verbrennung wirksam vermieden werden.

## Patentansprüche

1. Verfahren zum Vermeiden von verfrühten Verbrennungsereignissen bei einer Brennkraftmaschine mit folgenden Schritten:
- Bereitstellen zumindest eines Klopfsensors zum Erkennen von Klopfereignissen im Brennraum;
- bei Auftreten eines Klopfereignisses: Durchführen zumindest eines Prüfungsschrittes zur Unterscheidung zwischen zündfunkeninduzierten normalen Klopfereignissen und verfrühter Verbrennung;
- Durchführen von zumindest einer Maßnahme zur Vermeidung von verfrühter Verbrennung, wenn das Klopfereignis als verfrühte Verbrennung identifiziert wird,
**dadurch gekennzeichnet, dass** geprüft wird, ob die Intensität des Klopfereignisses über einer ersten Klopfschwelle für normales Klopfen liegt, und dass bei Überschreiten der ersten Klopfschwelle und bei Nichterreichen einer zweiten Klopfschwelle für verfrühte Verbrennung eine Maßnahme zur Vermeidung des normalen Klopfens durchgeführt wird.

2. Verfahren nach Anspruch 1, **dadurch gekennzeichnet, dass** der Prüfungsschritt beinhaltet, dass geprüft wird, ob die Intensität des Klopfereignisses über einer definierten zweiten Klopfschwelle für verfrühte Verbrennung liegt und dass bei Überschreiten der zweiten Klopfschwelle das Klopfereignis als verfrühte Verbrennung identifiziert wird.

3. Verfahren nach einem der Ansprüche 1 oder 2, **dadurch gekennzeichnet, dass** der Prüfungsschritt beinhaltet, dass bei Auftreten eines Klopfereignisses zuerst eine Maßnahme zur Verhinderung des normalen Klopfens durchgeführt und der Erfolg dieser Maßnahme überwacht wird, und dass bei negativem Erfolg der Maßnahme das Klopfereignis als verfrühte Verbrennung identifiziert wird.

4. Verfahren nach einem der Ansprüche 1 bis 3, **dadurch gekennzeichnet, dass** die Maßnahme zur Vermeidung des normalen Klopfens in einer Verstellung des Zündwinkels, vorzugsweise nach spät, besteht.

5. Verfahren nach einem der Ansprüche 1 bis 4, **dadurch gekennzeichnet, dass** der Prüfungsschritt vorsieht, dass der Zeitpunkt des Klopfereignisses ermittelt wird, und dass das Klopfereignis als verfrühte Verbrennung identifiziert wird, wenn dieses vor einem definierten Zeitpunkt innerhalb eines Arbeitszyklus auftritt.

6. Verfahren nach einem der Ansprüche 1 bis 5, **dadurch gekennzeichnet, dass** die Maßnahme zur Vermeidung der verfrühten Verbrennung in einer Reduzierung der Motorlast oder des Motormoments zumindest des betreffenden Zylinders besteht.

7. Verfahren nach Anspruch 6, **dadurch gekennzeichnet, dass** die Reduzierung der Motorlast oder des Motormoments zumindest teilweise durch Abmagern zumindest des betreffenden Zylinders erfolgt.

8. Verfahren nach Anspruch 6 oder 7, **dadurch gekennzeichnet, dass** die Reduzierung der Motorlast oder des Motormoments zumindest teilweise durch Anfetten zumindest des betreffenden Zylinders erfolgt.

9. Verfahren nach einem der Ansprüche 6 bis 8, **dadurch gekennzeichnet, dass** die Reduzierung der Motorlast oder des Motormoments zumindest teilweise durch Absenken des Saugrohrdruckes erfolgt.

10. Verfahren nach einem der Ansprüche 6 bis 9, **dadurch gekennzeichnet, dass** die Reduzierung der Motorlast oder des Motormoments zumindest teilweise durch zylinderselektive Kraftstoffabschaltung und/oder Zündausblendung erfolgt.

## Claims

1. A method for avoiding premature combustion events in an internal combustion engine comprising the following steps:
- providing at least one knock sensor to recognise knock events in the combustion chamber;
- on the occurrence of a knock event: carrying out at least one test step to distinguish between ignition spark-induced normal knock events and premature combustion;
- carrying out at least one measure to avoid premature combustion when the knock event is identified as premature combustion,
**characterised in that** a test is carried out as to whether the intensity of the knock event is above a first knock threshold for normal knocking, and **in that** when the first knock threshold is exceeded and a second knock threshold for premature combustion is not reached, a measure for avoiding the normal knocking is carried out.

2. A method according to claim 1, **characterised in that** the test step includes testing whether the intensity of the knock event is above a defined second knock threshold for premature combustion and **in that** when the second knock threshold is exceeded, the knock event is identified as premature combustion.

3. A method according to either of claims 1 or 2, **characterised in that** the test step includes, on occurrence of a knock event, firstly carrying out a measure to prevent the normal knocking and monitoring the success of this measure, and upon negative success of the measure, identifying the knock event as premature combustion.

4. A method according to any one of claims 1 to 3, **characterised in that** the measure for avoiding the normal knocking comprises adjusting the ignition angle, preferably to late.

5. A method according to any one of claims 1 to 4, **characterised in that** the test step provides that the time of the knock event is determined, and **in that** the knock event is identified as premature combustion when it occurs before a defined time within a work cycle.

6. A method according to any one of claims 1 to 5, **characterised in that** the measure for avoiding the premature combustion comprises reducing the engine load or the engine torque, at least of the relevant cylinder.

7. A method according to claim 6, **characterised in that** the reduction in the engine load or the engine torque takes place at least partially by making the mixture leaner, at least in the relevant cylinder.

8. A method according to claim 6 or 7, **characterised in that** the reduction in the engine load or the engine torque takes place at least partially by making the mixture richer, at least in the relevant cylinder.

9. A method according to any one of claims 6 to 8, **characterised in that** the reduction in the engine load or the engine torque takes place at least partially by reducing the intake manifold pressure.

10. A method according to any one of claims 6 to 9, **characterised in that** the reduction in the engine load or the engine torque takes place at least partially by cylinder-selective fuel shut-off and/or by fading out the ignition.

## Revendications

1. Procédé pour éviter des phénomènes de combustion prématurée dans un moteur à combustion interne comportant les étapes consistant à :
- préparer au moins un détecteur de cognement pour reconnaître des phénomènes de cognement dans la chambre de combustion,
- en présence d'un phénomène de cognement : mettre en oeuvre au moins une étape de contrôle pour faire la distinction entre des phénomènes de cognement normaux induits par des étincelles d'allumage et une combustion prématurée,
- mettre en oeuvre une mesure pour empêcher la combustion prématurée lorsque le phénomène de cognement a été identifié entant que combustion prématurée,
**caractérisé en ce que**
l'on contrôle si l'intensité du phénomène de cognement est située au-dessus d'un premier seuil de cognement correspondant à un cognement normal, et en présence d'un dépassement de ce premier seuil de cognement et sans avoir atteint un second seuil de cognement correspondant à une combustion prématurée on met en oeuvre une mesure pour empêcher le cognement normal.

2. Procédé conforme à la revendication 1,
**caractérisé en ce que**
l'étape de contrôle renferme une étape selon laquelle on contrôle si l'intensité du phénomène de cognement est située au-dessus d'un second seuil de cognement défini correspondant à une combustion prématurée, et en présence d'un dépassement de ce second seuil de cognement on identifie le phénomène de cognement entant que combustion prématurée.

3. Procédé conforme à l'une des revendications 1 et 2,
**caractérisé en ce que**
l'étape de contrôle renferme une étape selon laquelle en présence d'un phénomène de cognement on met tout d'abord en oeuvre une mesure pour empêcher le cognement normal et l'on surveille le résultat de cette mesure, et en présence d'un résultat négatif de cette mesure on identifie le phénomène de cognement entant que combustion prématurée.

4. Procédé conforme à l'une des revendications 1 à 3,
**caractérisé en ce que**
la mesure permettant d'empêcher le cognement normal est constituée par un réglage de l'angle d'allumage, de préférence dans le sens d'un retard à l'allumage.

5. Procédé conforme à l'une des revendications 1 à 4,
**caractérisé en ce que**
lors de l'étape de contrôle on détermine l'instant du phénomène de cognement, et ce phénomène de cognement est identifié entant que combustion prématurée lorsqu'il apparaît avant un instant défini dans un cycle de travail.

6. Procédé conforme à l'une des revendications 1 à 5,
**caractérisé en ce que**
la mesure pour empêcher une combustion prématurée consiste en une réduction de la charge ou du couple du moteur, au moins du cylindre concerné.

7. Procédé conforme à la revendication 6,
**caractérisé en ce que**
la réduction de la charge ou du couple du moteur est effectuée au moins partiellement en appauvrissant le mélange fourni à au moins le cylindre concerné.

8. Procédé conforme à la revendication 6 ou 7,
**caractérisé en ce que**
la réduction de la charge ou du couple du moteur est effectuée au moins partiellement en enrichissant le mélange fourni à au moins le cylindre concerné.

9. Procédé conforme à l'une des revendications 6 à 8,
**caractérisé en ce que**
la réduction de la charge ou du couple du moteur est effectuée au moins partiellement en diminuant la pression dans la tubulure d'admission.

10. Procédé conforme à l'une des revendications 6 à 9,
**caractérisé en ce que**
la réduction de la charge ou du couple du moteur est effectuée au moins partiellement en coupant sélectivement la fourniture de carburant dans des cylindres et/ou en supprimant l'allumage.
